# EUROPEAN PATENT APPLICATION

(11) **EP 4 353 686 A1**
(43) Date of publication of application: **17.04.2024**
(21) Application number: 23202722.7
(22) Date of filing: 10.10.2023
(51) Int. Cl.: C02F 1/00, B64G 1/46, B64G 6/00, C02F 1/28, C02F 1/44, C02F 101/16

(54) **WASTE FLUID WATER RECOVERY SYSTEMS**

(30) Priority: 10.10.2022 US 202217963112
(71) Applicant: Hamilton Sundstrand Corporation, Charlotte, NC 28217-4578 (US)
(72) Inventor: MESA, Jorge Ramon, League City, 77573 (US); GUINN, John, League City, TX, 77573 (US); ANDERSON, Samuel Alfred, Houston, 77062 (US)
(74) Representative: Dehns

(57) **Abstract**

In accordance with at least one aspect of this disclosure, a waste fluid water recovery system can include a waste fluid inlet line (101) configured to connect to a waste fluid source, the waste fluid inlet line (101) comprising one or more treatment components configured to treat the waste fluid, a treated waste fluid outlet line (109) configured to connect to one or more outlets, a tank (113) having a flexible membrane dividing an internal volume of the tank (113) into a first portion and a second portion, a first line (117a) fluidly connected to the first portion of the tank (113), a second line (117b) fluidly connected to the second portion of the tank (113), and a switching valve connected between the first line (117a), the second line (117b), the waste fluid inlet line (101), and the treated waste fluid outlet line (109). The switching valve can be configured to connect the first line (117a) with the waste fluid inlet line (101) and the second line (117b) with the treated waste fluid outlet line (109) in a first state. The switching valve can be configured to connect the first line (117a) with the treated waste fluid outlet line (109) and the second line (117b) with the waste fluid inlet line (101) in a second state.

## Description

### FIELD

This disclosure relates to waste fluid water recovery.

### BACKGROUND

In a contingency scenario (e.g., for astronauts), a suited crew member may be in the field, in a vehicle, or space station with normal waste fluid processing capabilities being unavailable, broken, or not working properly (e.g., due to maintenance or malfunction), and/or the crew member may be in urgent need of a water source. Consumption of one's own waste fluid (e.g., urine) in an emergency, even if untreated, is thought to be more hygienic and mentally acceptable than consuming the liquid waste of others. Urine, albeit treated, when stored (even for less than 24 hours), creates a significant amount of ammonia and other undesirable effluents that end up contaminating the system and making the liquid worse to eventually clean and consume (e.g., the stored liquid can have higher TOC levels for instance).

Such conventional methods and systems have generally been considered satisfactory for their intended purpose. However, there is still a need in the art for improvements. The present disclosure provides a solution for this need.

### SUMMARY

In accordance with at least one aspect of this disclosure, a waste fluid water recovery system can include a waste fluid inlet line configured to connect to a waste fluid source, the waste fluid inlet line comprising one or more treatment components configured to treat the waste fluid, a treated waste fluid outlet line configured to connect to one or more outlets, a tank having a flexible membrane dividing an internal volume of the tank into a first portion and a second portion, a first line fluidly connected to the first portion of the tank, a second line fluidly connected to the second portion of the tank, and a switching valve connected between the first line, the second line, the waste fluid inlet line, and the treated waste fluid outlet line. The switching valve can be configured to connect the first line with the waste fluid inlet line and the second line with the treated waste fluid outlet line in a first state. The switching valve can be configured to connect the first line with the treated waste fluid outlet line and the second line with the waste fluid inlet line in a second state.

In the first state, the tank can be configured to receive treated waste fluid from the first line at the first portion causing the flexible membrane to flex and to reduce the volume of the second portion to cause treated waste fluid to flow out to the second line and to the one or more outlets. In the second state, the tank can be configured to receive treated waste fluid from the second line at the second portion causing the flexible membrane to flex and to reduce the volume of the first portion to cause treated waste fluid to flow out to the first line and to the one or more outlets.

In certain embodiments, the one or more treatment components can include a waste fluid treatment bed. In certain embodiments, the waste fluid treatment bed can be a carbon filter configured to filter waste fluid. In certain embodiments, the one or more treatment components include a waste fluid treatment membrane configured to be selectively permeable to separate water from waste fluid.

In certain embodiments, the one or more outlets can include a contingency consumption outlet such that the treated waste fluid flows from the tank directly to a location to be consumed. In certain embodiments, the one or more outlets can include at least one of a space vacuum outlet, or a post processing outlet, or a collection tank outlet.

In certain embodiments, the waste fluid inlet line can include one or more input quick disconnects configured to connect to the waste fluid source. In certain embodiments, the treated waste fluid outlet line can include one or more outlet quick disconnects configured to connect to the one or more outlets.

In certain embodiments, the system can include a first pressure sensor upstream of the carbon filter and a second pressure sensor downstream of the carbon filter to allow determination of life of filter based on pressure drop. In certain embodiments, the system can include a flow meter on the waste fluid inlet line to determine flow on the waste fluid inlet line.

In certain embodiments, the system can include a dead man switch on the waste fluid inlet line upstream of the switching valve. In certain embodiments, the system can include a pressurized gas source configured to connect to the waste fluid inlet line to pressurize waste fluid from the waste fluid source.

In accordance with at least one aspect of this disclosure, a space suit can include a waste fluid water recovery system as disclosed herein, e.g., as described above. The space suit can include any suitable features of the system, e.g., as described above (e.g., a pressurized gas source).

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of a system in accordance with this disclosure, shown in a first state;
Fig. 2 is a schematic view of the embodiment of Fig. 1, shown in a second state; and
Fig. 3 is a schematic view of an embodiment of a system in accordance with this disclosure.

### DETAILED DESCRIPTION

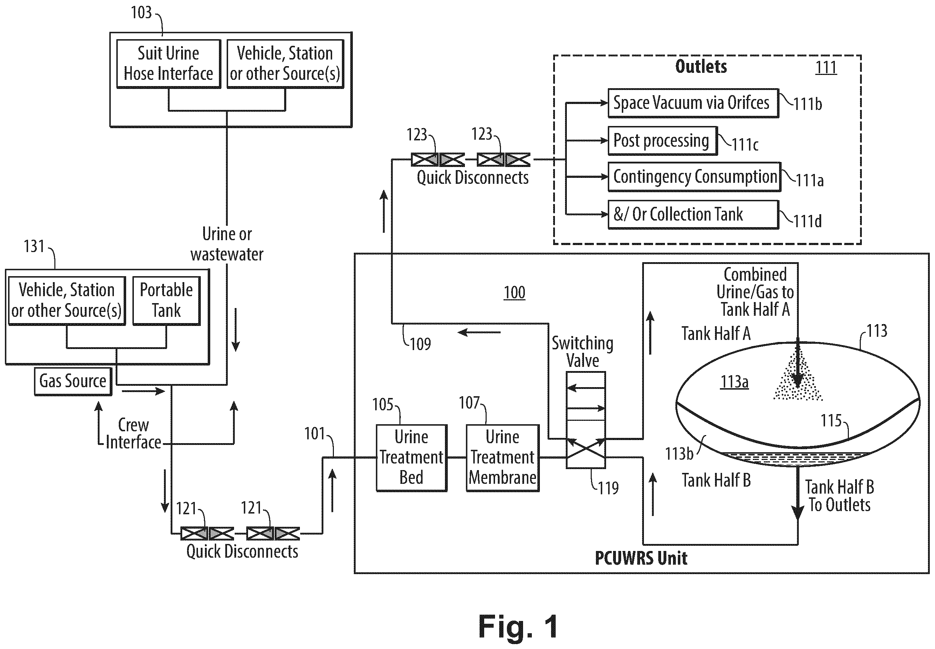

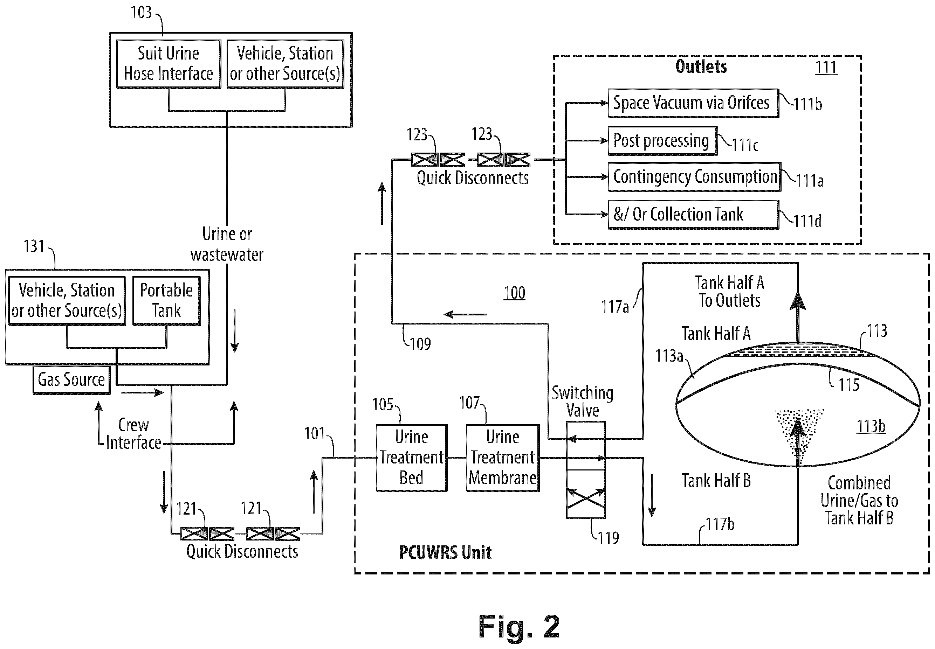

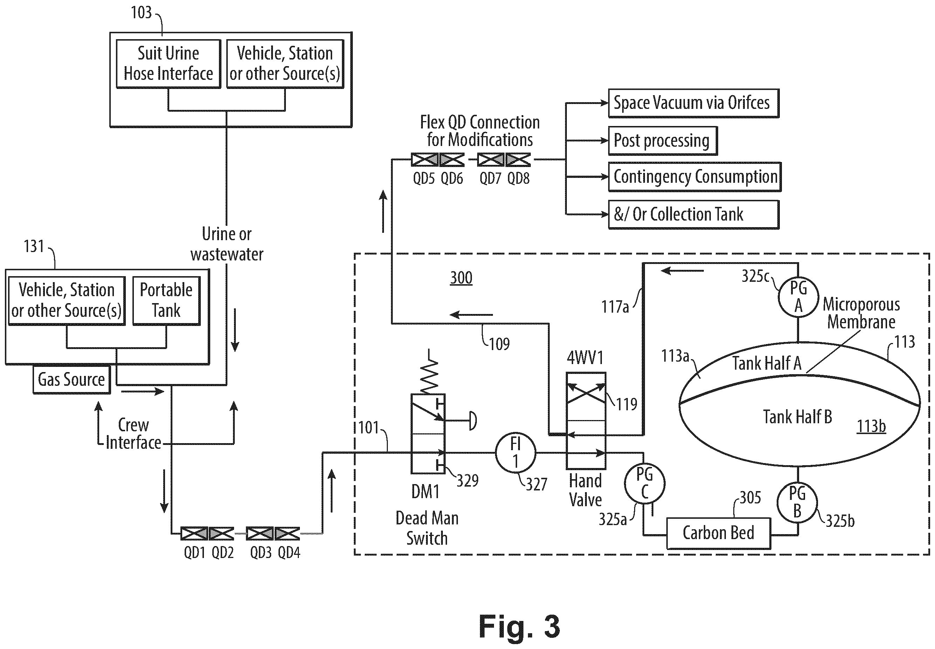

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2 and 3.

In accordance with at least one aspect of this disclosure, referring to Figs. 1 and 2, a waste fluid (e.g., urine or other suitable waste liquid) water recovery system 100 can include a waste fluid inlet line 101 configured to connect to a waste fluid source 103, the waste fluid inlet line 101 comprising one or more treatment components 105, 107 configured to treat the waste fluid. The system 100 can include a treated waste fluid outlet line 109 configured to connect to one or more outlets 111.

The system 100 can also include a tank 113 having a flexible membrane 115 (e.g., a liquid and/or gas tight membrane, a microporous membrane, etc.) dividing an internal volume of the tank 113 into a first portion 113a and a second portion 113b. The tank 113 can be a clear plastic tank, or made of any other suitable material. The system 100 can include a first line 117a fluidly connected to the first portion 113a of the tank 113, and a second line 117b fluidly connected to the second portion 113b of the tank 113.

The system 100 can also include a switching valve 119 (e.g., a 4 way valve) connected between the first line 117a, the second line 117b, the waste fluid inlet line 101, and the treated waste fluid outlet line 109. The switching valve 119 can be configured to connect the first line 117a with the waste fluid inlet line 101 and the second line 117b with the treated waste fluid outlet line 109 in a first state (e.g., as shown in Fig. 1). The switching valve 119 can be configured to connect the first line 117a with the treated waste fluid outlet line 109 and the second line 117b with the waste fluid inlet line 101 in a second state (e.g., as shown in Fig. 2). The switching valve 119 can be located downstream of the one or more treatment component 105, 107 in certain embodiments.

In the first state, the tank 113 can be configured to receive treated waste fluid (e.g., urine, wastewater) from the first line 117a at the first portion 113a causing the flexible membrane 115 to flex and to reduce the volume of the second portion 113b to cause treated waste fluid to flow out to the second line 113b and to the one or more outlets 111 (e.g., due to a pushing or pulling action on the flexible membrane 115). In the second state, the tank 113 can be configured to receive treated waste fluid from the second line 117b at the second portion 113b causing the flexible membrane 115 to flex and to reduce the volume of the first portion 113a to cause treated waste fluid to flow out to the first line 117a and to the one or more outlets 111.

In certain embodiments, the one or more treatment components 105, 107 can include a waste fluid treatment bed 105. In certain embodiments, the waste fluid treatment bed 105 can be a carbon filter configured to filter waste fluid (e.g., urine). In certain embodiments, the one or more treatment components 105, 107 can include a waste fluid treatment membrane 107 configured to be selectively permeable to separate water from waste fluid, for example. Any other suitable treatment components (e.g., flavoring devices, etc.) are contemplated herein. Any suitable location and/or number of treatment components are contemplated herein.

In certain embodiments, the one or more outlets 111 can include a contingency consumption outlet 111a such that the treated waste fluid flows from the tank 113 directly to a location to be consumed (e.g., a mouthpiece within a space suit). In certain embodiments, the one or more outlets 111 can include at least one of a space vacuum outlet 11 1b, or a post processing outlet 11 1c, or a collection tank outlet 111d. Any suitable outlets or use of the effluent of system 100 is contemplated herein.

In certain embodiments, the waste fluid inlet line 101 can include one or more input quick disconnects 121 configured to connect to the waste fluid source. In certain embodiments, the treated waste fluid outlet line 109 can include one or more outlet quick disconnects 123 configured to connect to the one or more outlets 111. The quick disconnects 121, 123 can provide a standardized way to ensure proper sealed connection, and quickly, e.g.., for space deployed systems.

In certain embodiments, referring to Fig. 3, the system 300 can include a first pressure sensor 325a upstream of the carbon filter 305 and a second pressure sensor 325b downstream of the carbon filter 305 to allow determination of life of filter 305 based on pressure drop. The system can include a third pressure sensor 325c on the line 109, for example, for sensing outlet pressure from the tank 113. The carbon bed 305 can be located on the second line as shown, or on the first line, or on the inlet line 101. Any suitable location and/or number of treatment components are contemplated herein. In certain embodiments, the system 100 can include a flow meter 327 on the waste fluid inlet line 101 to determine flow on the waste fluid inlet line 101.

In certain embodiments, the system 200 can include a dead man switch 329 (e.g., a biased switch that is biased to shut off flow) on the waste fluid inlet line 101 upstream of the switching valve 119, for example. The dead man switch 329 can provide safety, e.g., in a space context where vacuum can be applied at the outlet 111 to prevent unintended depressurization. A user can be required to constantly apply pressure to the dead man switch 329 to allow flow through the device 300. Any other suitable location for the dead man switch 329 is contemplated herein.

In certain embodiments, the system 100, 300 can include a pressurized gas source configured to connect to the waste fluid inlet line 101 to pressurize waste fluid from the waste fluid source 103. Any suitable pressure source (e.g., pressurized air in a portable container in a space suit, vehicle or station air, etc.) is contemplated herein. Any suitable amount of pressure (e.g., about 4psi to about 8psi) is contemplated herein. Any suitable waste fluid source (e.g., a suit urine hose interface, a vehicle or station source), is contemplated herein. In certain embodiments, a vacuum outlet can be used to provide the motive force for the waste fluid to flow through the system 100, 300. Any suitable motive source is contemplated herein (e.g., mechanical actuation of the flexible membrane 115.

In accordance with at least one aspect of this disclosure, a space suit can include a waste fluid water recovery system 100, 300 as disclosed herein, e.g., as described above. The space suit can include any suitable features of the system 100, 300, e.g., as described above (e.g., a pressurized gas source).

Embodiments can be shared between multiple people, or can be configured to be a personal device (e.g., in-suit mounted with a small pressure source). In certain embodiments, the tank can act as a piston (e.g., pushed by upstream pressure gas, or mechanical means like a bellows, or a vacuum pulling on membrane). In certain embodiments, the flexible membrane is a microporous membrane or forward osmosis membrane, and can be selectively permeable. In certain embodiments, the flexible membrane is an impermeable flexible sheet. Embodiments can include a flow sensor/gauge (e.g., downstream of a dead man switch and upstream of a switching valve) which can be a mechanical gauge or electrical gauge, for example, and can be used for urination/hydration data as well.

The switching valve (e.g., a hand valve) can be a manual valve or an automated valve. The manual valve can be safer in a contingency scenario as it does not require electricity. Embodiments can include optional quick disconnects for hoses (e.g., for multi person use or for easy maintenance and/or removal).

Embodiment can include a personal contingency urine water recovery system (PCUWRS). There is a case for processing the urine as fresh as possible instead of storing it for later processing. Certain embodiments enable processing of a user's own urine by flowing it through a urine treatment bed first and/or a membrane filter upstream of a leak-free clear tank. In certain embodiments, gas from either a stand-alone tank/vehicle or from the ambient atmosphere can be fed via a manually actuated hand valve as needed to force the movement of the effluent through both the treatment bed and the treatment membrane, for example. In certain embodiments, a relatively small light weight hand pump could potentially accomplish this actuation objective.

In certain embodiments, flavoring could be added after to the processed water in order to aid its pleasant consumption or it could be routed for further processing in a water processor system. Similarly the output could be stored for formal processing when the nominal systems are back functioning normally. In certain embodiments, the system can be an add-in attachment of the space suit and also used for interfaces with space stations such as the ISS or Axiom, and/or vehicles such as Lunar Terrain Vehicles (LTV), and/or rockets' ECLSS cabin interfaces such as Orion's. Certain embodiments provide a low weight, low volume, low cost system that doesn't require electrical power, and can be used to process fresh urine for emergency consumption for a limited amount of time until the nominal effluent processing hardware capabilities are restored and/or new potable water source is made available.

The tank can be similar to that used on the Orion Contingency Waste Management System (OCWMS), e.g., made of clear hard plastic and a hand valve can be attached to it. The urine treatment membrane can be a reverse osmosis (RO) filter, an e-PTFE unit similar to the ISS UPA' ARFTA tank pump filter, and/or a treated microporous membrane (e.g., with silver for instance) like TCPS' MMI bags. In certain embodiments, inlets and outlets of the PCUWRS can be easily and safely attached/detached via quick disconnects.

Certain embodiments can provide redundancy and reduce risks for supporting longer missions, and can allow for adventuring further apart from life supporting equipment at a minimum cost in weight, volume, and power. For example, if an astronaut is hurt some distance from an LTV and runs out of water, embodiments could be life saving for such a case.

Certain embodiments can be made for Earth applications, e.g., for remote locations or when clean water is not available (e.g., in a disaster), with something like an intravenous (IV) bag and a microporous membrane to recover water from an individual's urine. For example, embodiments can be configured for applications such as battle scenarios and hiking, e.g., in the case of a contingency such as a stranded hiker or a soldier in the middle of the dessert that has become detached from their unit and supplies.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the subject disclosure.

## Claims

1. A waste fluid water recovery system, comprising:
a waste fluid inlet line (101) configured to connect to a waste fluid source, the waste fluid inlet line (101) comprising one or more treatment components configured to treat the waste fluid;
a treated waste fluid outlet line (109) configured to connect to one or more outlets;
a tank (113) having a flexible membrane dividing an internal volume of the tank (113) into a first portion and a second portion;
a first line (117a) fluidly connected to the first portion of the tank (113);
a second line (117b) fluidly connected to the second portion of the tank (113); and
a switching valve connected between the first line (117a), the second line (117b), the waste fluid inlet line (101), and the treated waste fluid outlet line (109), wherein the switching valve is configured to connect the first line (117a) with the waste fluid inlet line (101) and the second line (117b) with the treated waste fluid outlet line (109) in a first state, wherein the switching valve is configured to connect the first line (117a) with the treated waste fluid outlet line (109) and the second line (117b) with the waste fluid inlet line (101) in a second state,
wherein in the first state, the tank (113) is configured to receive treated waste fluid from the first line (117a) at the first portion causing the flexible membrane to flex and to reduce the volume of the second portion to cause treated waste fluid to flow out to the second line (117b) and to the one or more outlets.
wherein in the second state, the tank (113) is configured to receive treated waste fluid from the second line (117b) at the second portion causing the flexible membrane to flex and to reduce the volume of the first portion to cause treated waste fluid to flow out to the first line (117a) and to the one or more outlets.

2. The system of claim 1, wherein the one or more treatment components include a waste fluid treatment bed.

3. The system of claim 2, wherein the waste fluid treatment bed is a carbon filter configured to filter waste fluid.

4. The system of claim 3, wherein the one or more treatment components include a waste fluid treatment membrane configured to be selectively permeable to separate water from waste fluid, and/or further comprising a first pressure sensor upstream of the carbon filter and a second pressure sensor downstream of the carbon filter to allow determination of life of filter based on pressure drop.

5. The system of any preceding claim, wherein the one or more outlets include a contingency consumption outlet such that the treated waste fluid flows from the tank (113) directly to a location to be consumed, and/or wherein the one or more outlets include at least one of a space vacuum outlet, or a post processing outlet, or a collection tank outlet.

6. The system of any preceding claim, wherein the waste fluid inlet line (101) includes one or more input quick disconnects configured to connect to the waste fluid source.

7. The system of any preceding claim, wherein the treated waste fluid outlet line (109) includes one or more outlet quick disconnects configured to connect to the one or more outlets.

8. The system of any preceding claim, further comprising a flow meter on the waste fluid inlet line (101) to determine flow on the waste fluid inlet line (101).

9. The system of any preceding claim, further comprising a dead man switch on the waste fluid inlet line (101) upstream of the switching valve.

10. The system of any preceding claim, further comprising a pressurized gas source configured to connect to the waste fluid inlet line (101) to pressurize waste fluid from the waste fluid source.

11. A space suit, comprising:
waste fluid water recovery system, comprising:
a waste fluid inlet line (101) configured to connect to a waste fluid source, the waste fluid inlet line (101) comprising one or more treatment components configured to treat the waste fluid;
a treated waste fluid outlet line (109) configured to connect to one or more outlets;
a tank (113) having a flexible membrane dividing an internal volume of the tank (113) into a first portion and a second portion;
a first line (117a) fluidly connected to the first portion of the tank (113);
a second line (117b) fluidly connected to the second portion of the tank (113); and
a switching valve connected between the first line (117a), the second line (117b), the waste fluid inlet line (101), and the treated waste fluid outlet line (109), wherein the switching valve is configured to connect the first line (117a) with the waste fluid inlet line (101) and the second line (117b) with the treated waste fluid outlet line (109) in a first state, wherein the switching valve is configured to connect the first line (117a) with the treated waste fluid outlet line (109) and the second line (117b) with the waste fluid inlet line (101) in a second state,
wherein in the first state, the tank (113) is configured to receive treated waste fluid from the first line (117a) at the first portion causing the flexible membrane to flex and to reduce the volume of the second portion to cause treated waste fluid to flow out to the second line (117b) and to the one or more outlets.
wherein in the second state, the tank (113) is configured to receive treated waste fluid from the second line (117b) at the second portion causing the flexible membrane to flex and to reduce the volume of the first portion to cause treated waste fluid to flow out to the first line (117a) and to the one or more outlets.

12. The space suit of claim 11, wherein the one or more treatment components include a waste fluid treatment bed.

13. The space suit of claim 12, wherein the waste fluid treatment bed is a carbon filter configured to filter waste fluid, and optionally, wherein the one or more treatment components include a waste fluid treatment membrane configured to be selectively permeable to separate water from waste fluid.

14. The space suit of any of claims 11 to 13, wherein the one or more outlets include a contingency consumption outlet such that the treated waste fluid flows from the tank (113) directly to a location to be consumed.

15. The space suit of any of claims 11 to 14, further comprising a dead man switch on the waste fluid inlet line (101) upstream of the switching valve, and/or further comprising a pressurized gas source configured to connect to the waste fluid inlet line (101) to pressurize waste fluid from the waste fluid source.
